# EUROPÄISCHE PATENTSCHRIFT

(11) **EP 0 467 181 B1**
(45) Veröffentlichungstag und Bekanntmachung des Hinweises auf die Patenterteilung: **09.03.1994**
(21) Anmeldenummer: 91111291.0
(22) Anmeldetag: 06.07.1991
(51) Int. Cl.: F16H 61/40, B60K 28/00

(54) **Hydrostatisches Getriebe für ein Radbremsen aufweisendes Fahrzeug**
Hydrostatic transmission for a vehicle with wheel brakes
Transmission hydrostatique pour un véhicule avec freins sur roues

(30) Priorität: 17.07.1990 US 554213
(43) Veröffentlichungstag der Anmeldung: 22.01.1992
(73) Patentinhaber: DEERE & COMPANY, Moline, Illinois 61265 (US)
(72) Erfinder: Hunt, Kenneth Edward, Oconomowoc, Wisconsin 53066 (US)
(74) Vertreter: Feldmann, Bernhard

(56) Entgegenhaltungen:
- GB-A- 2 075 154
- US-A- 3 360 933
- US-A- 3 376 703
- US-A- 3 608 285

## Beschreibung

Die Erfindung bezieht sich auf ein hydrostatisches Getriebe für ein Radbremsen aufweisendes Fahrzeug, insbesondere Kleinschlepper, mit einer Pumpe, einem Motor, die über eine erste und eine zweite Leitung miteinander verbunden sind, und einer an die Leitungen angeschlossenen Bypassleitung mit zwei Bypassventilen, die über mindestens ein von Hand betätigbares Steuermittel zwischen einer ersten den Durchfluß von Flüssigkeit durch die Bypassventile blockierenden Stellung und einer zweiten den Durchfluß von Flüssigkeit durch die Bypassventile gestattenden Stellung verstellbar sind.

Kleinschlepper für die Rasen- und Gartenpflege sind in der Regel mit hydrostatischen Getrieben ausgerüstet und deren hydrostatischer Kreislauf zwischen Pumpe und Motor verbleibt auch dann noch unter Druck, wenn der Verbrennungsmotor dieser Fahrzeuge ausgeschaltet ist. Bei ausgeschaltetem Verbrennungsmotor arbeitet die Pumpe nicht mehr, das heißt, sie läuft nicht mehr um und läßt keine Flüssigkeit durch, so daß ein Schieben von Hand bei anfallenden Wartungsarbeiten oder Reparaturen nur möglich ist, wenn eine Bypassleitung für die Pumpe vorgesehen ist. Bei normalem Betrieb verbleibt die Bypassleitung über in ihr vorgesehene Bypassventile geschlossen, die zum Schieben des Fahrzeuges bei abgestelltem Verbrennungsmotor geöffnet werden müssen.

Bei dem hydrostatischen Getriebe (US-A-3 360 933), von dem die Erfindung ausgeht, werden die Bypassventile über einen von Hand verstellbaren Nocken geöffnet oder geschlossen. Vergißt die Bedienungsperson nach den abgeschlossenen Wartungsarbeiten, den Nocken wieder in seine Stellung zurückzuverstellen, in der die Bypassventile normalerweise geschlossen sind, kann sich zwischen Pumpe und Motor kein Druck mehr aufbauen.

Andererseits ist es bei einem hydrostatischen Getriebe auch nicht mehr neu (US-A-3 376 703), eine zusätzliche Bypassleitung mit einem als Rückschlagventil ausgebildeten Bypassventil vorzusehen. Hier wird das Bypassventil geschlossen, wenn sich die Bedienungsperson auf dem Fahrersitz setzt, und immer geöffnet, wenn der Sitz nicht belastet ist. Dies resultiert unter anderem in dem Nachteil, daß das Fahrzeug nicht im Stehen gefahren werden kann, was bei manchen Einsätzen wünschenswert ist. In jedem Fall muß das abgestellte Fahrzeug gesondert gegen Wegrollen gesichert werden.

Die mit der Erfindung zu lösende Aufgabe wird darin gesehen, daß bei abgestelltem Fahrzeug die Bypassventile nicht automatisch geöffnet, aber beim Anlassen des Fahrzeuges automatisch geschlossen werden. Diese Aufgabe ist nach der Erfindung dadurch gelöst worden, daß das oder die Steuermittel mit den Radbremsen derart verbunden ist bzw. sind, daß bei angelegter Radbremse die Bypassventile in ihre erste Stellung zurückgeführt werden. Auf diese Weise ist das hydrostatische Getriebe immer betriebsbereit, sobald die Bremse betätigt wird, was bei hydrostatischen Getrieben beim Anlassen des Fahrzeuges aus Sicherheitsgründen immer erfolgen sollte. Die Bedienungsperson braucht damit nicht mehr darauf zu achten, ob nach einem manuellen Betätigen der Stellteile zum Schieben des Fahrzeuges die Bypassventile auch wieder geschlossen wurden. Die Handhabung des Fahrzeuges wird dadurch wesentlich vereinfacht.

Im einzelnen sind nach der Erfindung hierzu zwei Steuermittel vorgesehen, die jeweils aus einem schwenkbar gelagerten Stellarm bestehen, die von Hand aus einer ersten Stellung, in der sich die Bypassventile in ihren ersten Stellungen befinden, in eine zweite Stellung verstellbar sind, in der sich die Bypassventile in ihrer zweiten Stellung befinden, und über ein Bremsgestänge aus der zweiten Stellung in die erste Stellung. Selbstverständlich ist es nach der Erfindung auch möglich, die Stellarme auch von Hand wieder zurückzustellen.

Nach einem weiteren Vorschlag der Erfindung können die Stellarme in ihrer zweiten Stellung durch ein federbelastetes Rastmittel feststellbar sein, das bei Betätigung der Radbremsen gelöst wird, indem die Federwirkung überkommen wird.

Die Stellarme sind mit dem Bremsgestänge nicht fest verbunden, sondern mittig gelagert und weisen je ein freies Ende auf, das gegen das Bremsgestänge anliegt, wenn die Radbremsen angelegt sind. Beim manuellen Verstellen der Stellarme schwenkt dann das freie Ende der Stellarme von dem Bremsgestänge fort.

Ein weiteres Sicherheitsmerkmal wird auch darin gesehen, daß das Bremsgestänge bei angelegten Radbremsen einen Schalter in einem Sromkreis schließt, und das Fahrzeug bei geschlossenem Stromkreis gestartet werden kann. Damit ist sichergestellt, daß beim Anlassen des Fahrzeuges die Bremse immer betätigt wird und sich das hydrostatische Getriebe immer in seinem Betriebszustand befindet.

In der Zeichnung ist ein nachfolgend näher erläutertes Ausführungsbeispiel der Erfindung dargestellt. Es zeigt
- Fig. 1: einen Kleinschlepper in Form eines Garten- und Rasenschleppers,
- Fig. 2: ein hydrostatisches Getriebe mit Steuermitteln zum Druckauf- und Abbau,
- Fig. 3: die Steuermittel nach Fig. 2 in einer Stellung, in der die Bypassventile geöffnet sind und das Bremsgestänge unbetätigt ist,
- Fig. 4: die Steuermittel nach Fig. 2 in einer Stellung, in der die Bypassventile geschlossen sind und
- Fig. 5: eine Ansicht nach der Linie 5 : 5 in der Fig. 4.

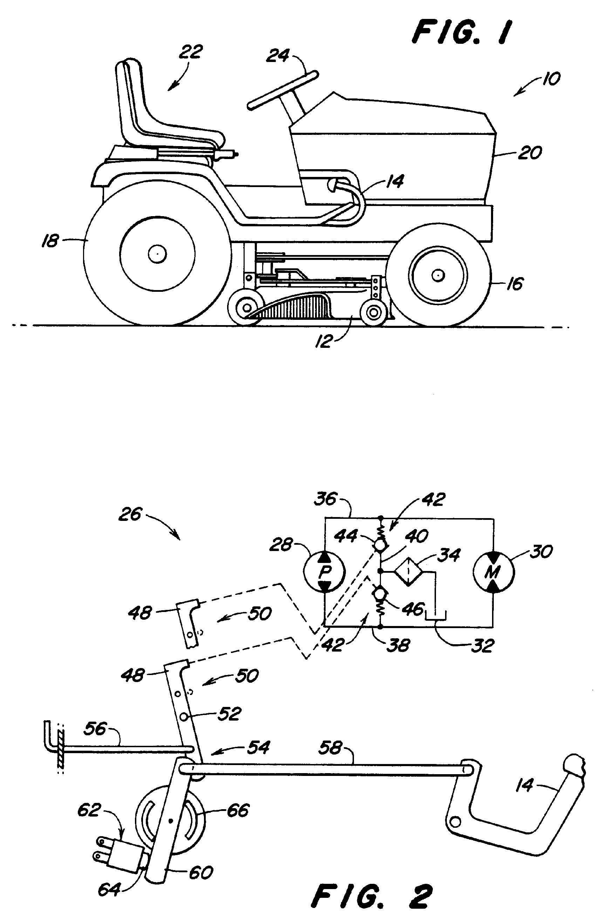

In Fig. 1 der Zeichnung ist ein herkömmlicher Kleinschlepper 10 für die Garten- und Rasenpflege mit zwischen seinen Rädern 16 und 18 angebautem Mähwerk 12 dargestellt. Hierbei sind die rückwärtigen Räder 18 antreibbar und mit Radbremsen 66 versehen, die über ein Bremspedal 14 betätigbar sind. Unter einer Abdeckung 20 befindet sich ein Verbrennungsmotor für den Kleinschlepper 10, dessen Bedienungsstand mit 22 und dessen Steuerrad mit 24 bezeichnet ist.

In Fig. 2 ist ein hydrostatisches Getriebe für den Kleinschlepper 10 schematisch dargestellt, das über einen Steuermechanismus 26 druckentlastet werden kann. Im einzelnen weist das hydrostatische Getriebe eine Pumpe 28 und einen Motor 30 sowie einen Sammelbehälter 32 auf, der über eine Leitung mit einem Filter 34 in Verbindung steht. Flüssigkeit kann über den Filter 34 aus dem Sammelbehälter 32 in eine erste und eine zweite Leitung 36 und 38 gelangen, die jeweils mit der Pumpe 28 und dem Motor 30 verbunden sind, einen geschlossenen Kreislauf bilden und wahlweise als Druck- oder Saugleitung dienen, da die Pumpe ebenso wie der Motor in ihrer Förderrichtung umkehrbar ist.

Zwischen der ersten und der zweiten Leitung 36 und 38 ist eine Bypassleitung 40 vorgesehen, die Bypassventile 42 aufweist. Beim bevorzugten Ausführungsbeispiel sind die Bypassventile 42 als Rückschlagventile ausgebildet. Andere Ausführungsformen sind natürlich ebenfalls möglich, wie beispielsweise Schieberventile. Die Bypassventile weisen im einzelnen Rückschlagventilkugeln 44 und 46 auf, die zwischen geschlossenen und offenen oder ersten und zweiten Stellungen verstellbar sind, um einen Flüssigkeitsdurchfluß durch die Bypassventile 42 zu blockieren oder zu gestatten. Zum mechanischen Verstellen der Rückschlagventilkugeln 44 und 46 sind Steuermittel 48 in Form von zwei Stellarmen vorgesehen.

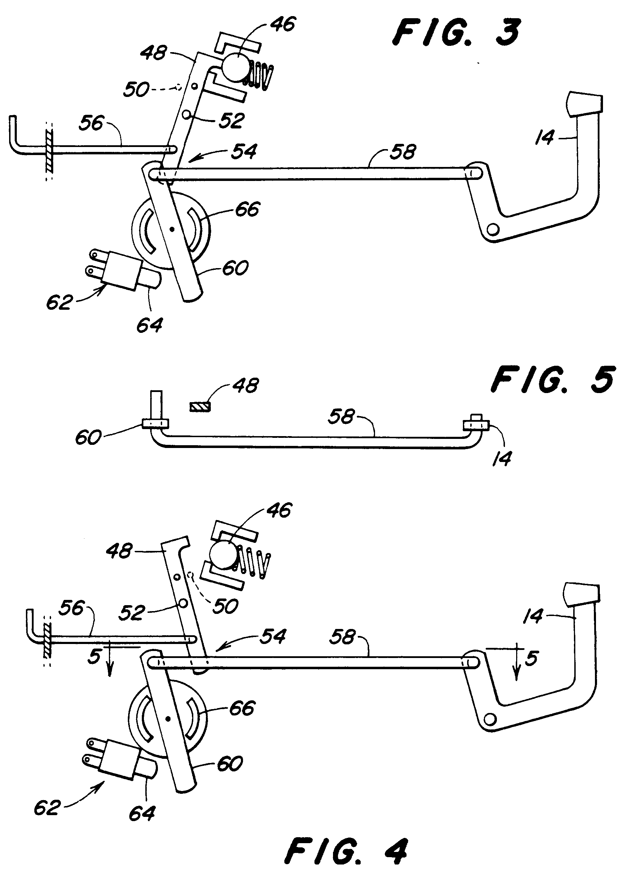

Die Steuermittel 48 arbeiten mit Sperrmitteln 50 zusammen, die dazu dienen, die Steuermittel 48 in einer Stellung festzustellen, in der sich die Rückschlagventilkugeln 44 und 46 in ihren offenen Positionen befinden. Eine solche Stellung ist in Fig. 3 dargestellt. Andere Sperrmittel sind natürlich ebenfalls verwendbar, wie beispielsweise federbelastete Kugeln, die in Ausnehmungen in den Stellarmen einrasten können.

Die Steuermittel 48 oder Stellarme sind um eine Gelenkachse 52 verschwenkbar und im Bereich ihres unteren Endes an einen von Hand betätigbaren Hebel 56 angeschlossen, der von einer Bedienungsperson betätigt werden kann. Der Handhebel 56 und die Steuermittel 48 stehen mit einem Bremsgestänge in Wirkverbindung, das eine Steuerstange 58 aufweist. Die Steuerstange 58 greift einenends an dem Bremspedal 14 an und wird bei heruntergetretenem Bremspedal mit Bezug auf Fig. 2 nach rechts verstellt, wodurch die in irgendeiner geeigneten Form an das Bremsgestänge anliegenden Steuermittel 48 entgegen dem Uhrzeigerdrehsinn verschwenkt werden, sofern sie sich vorher in ihrer in Fig. 3 dargestellten Stellung befunden haben sollten. Bei diesem Schwenkvorgang werden die Sperrmittel 50 überwunden und die Rückschlagventilkugeln 44 und 46 freigegeben, so daß die auf die Rückschlagventilkugeln einwirkenden Federn diese wieder in ihre geschlossenen Stellungen verstellen können.

Die Steuerstange 58 ist an ihrem dem Bremspedal 14 abgelegenem Ende an eine Bremsstange 60 angeschlossen, die ihrerseits einen elektrischen Sperrteil 62 betätigen kann. Beim vorliegenden Ausführungsbeispiel ist dieser in Form eines Schalters 64 ausgebildet, der bei heruntergetretenem Bremspedal 14 geschlossen wird, so daß dann ein Stromkreis zwischen einer Batterie und einer Startvorrichtung für den Verbrennungsmotor aufgebaut wird und der Verbrennungsmotor angelassen werden kann. Fig. 2 zeigt den Schalter 64 in seiner geschlossenen Stellung.

Nachfolgend wird auf die Wirkungsweise des vorstehend beschriebenem hydrostatischen Getriebes eingegangen.

Hat die Bedienungsperson Wartungsarbeiten an dem Fahrzeug vorzunehmen oder soll es von Hand bei abgestelltem Verbrennungsmotor geschoben werden, so muß der Verbrennungsmotor zunächst abgestellt werden. Der Steuermechanismus 26 befindet sich dann in der in Fig. 4 dargestellten Position. Sobald der Verbrennungsmotor nicht mehr umläuft, zieht die Bedienungsperson dann den Handhebel 56 in seine in Fig. 3 wiedergegebene Stellung. Hierbei werden die Steuerteile 48 aus ihrer in Fig. 4 gezeigten Stellung in die in Fig. 3 dargestellte Position verstellt, in der die Stellarme mit ihrem einen Ende gegen die Rückschlagventilkugeln 44 und 46 anliegen und diese von ihren Ventilsitzen abgehoben haben. Die Bypassventile 42 befinden sich dann in ihrer Offenstellung und Flüssigkeit kann damit abströmen bzw. wird druckentlastet. Die Pumpe 28 wird dem sich beim Schieben des Fahrzeuges drehendem Motor 30 keinen Widerstand entgegensetzen, was der Fall wäre, wenn die Bypassventile 42 noch geschlossen wären.

Sind die Wartungsarbeiten abgeschlossen und soll der Verbrennungsmotor erneut angelassen werden, so betätigt die Bedienungsperson das Bremspedal 14, wodurch die Bremsen angelegt werden. Beim Treten des Bremspedals 14 wird die Steuerstange 58 mit Bezug auf die Fig. 2 nach rechts ververstellt und die Bremsstange 60 im Uhrzeigerdrehsinn. Die Bremsen werden angelegt und gleichzeitig wird der Schalter 64 geschlossen, so daß der Stromkreis für die Zündung vervollständigt wird. Damit kann der Verbrennungsmotor nur bei angelegten Bremsen gestartet werden, was ein zusätzliches Sicherheitsmerkmal bedeutet. Beim Verschwenken der Bremsstange 60 im Uhrzeigerdrehsinn wird das Bremsgestänge gegen die Steuermittel 48 zur Anlage gelangen und diese um ihre Gelenkachse 52 entgegen dem Uhrzeigerdrehsinn verstellen. Hierbei wird die von den Sperrmitteln 50 ausgehende Kraft überwunden und die Stellarme geben die Rückschlagventilkugeln 44 und 46 frei, so daß diese über die vorgesehenen Federn wieder auf ihre Ventilsitze gedrückt werden. Die Bypassleitung 40 wird dadurch geschlossen. Bei laufendem Verbrennungsmotor und damit umlaufender Pumpe 28 kann sich dann im hydrostatischen Getriebe der für seine Funktion erforderliche Druck wieder aufbauen.

Aus dem Vorstehenden folgt, daß die Bedienungsperson auf die Stellung des Handhebels 56 nicht zu achten braucht, da er beim Betätigen der Bremse automatisch aus seiner in Fig. 3 gezeigten Stellung in seine Position nach Fig. 2 zurückgeführt wird. Im ganzen gesehen, ist mit der vorliegenden Erfindung ein besonders einfaches und betriebssicheres System zum Abbauen des Drucks in einem hydrostatischen Getriebe geschaffen. Die Wiederinbetriebnahme des Fahrzeuges ist ebenso einfach, da die Bedienungsperson das Fahrzeug bei angelegter Bremse nur zu starten braucht.

## Patentansprüche

1. Hydrostatisches Getriebe für ein Radbremsen (66) aufweisendes Fahrzeug, insbesondere Kleinschlepper (10), mit einer Pumpe (28), einem Motor (30), die über eine erste und eine zweite Leitung (36 und 38) miteinander verbunden sind, und einer an die Leitungen (36 und 38) angeschlossenen Bypassleitung (40) mit zwei Bypassventilen (44 und 46), die über mindestens ein von Hand betätigbares Steuermittel (48) zwischen einer ersten den Durchfluß von Flüssigkeit durch die Bypassventile (44 und 46) blockierenden Stellung und einer zweiten den Durchfluß von Flüssigkeit durch die Bypassventile (44 und 46) gestattenden Stellung verstellbar sind, dadurch gekennzeichnet, daß das oder die Steuermittel (48) mit den Radbremsen (66) derart verbunden ist bzw. sind, daß bei angelegter Radbremse (66) die Bypassventile (44 und 46) in ihre erste Stellung zurückgeführt werden.

2. Hydrostatisches Getriebe nach Anspruch 1, dadurch gekennzeichnet, daß zwei Steuermittel (48) vorgesehen sind, die jeweils aus einem schwenkbar gelagerten Stellarm bestehen, die von Hand aus einer ersten Stellung, in der sich die Bypassventile (44 und 46) in ihren ersten Stellungen befinden, in eine zweite Stellung verstellbar sind, in der sich die Bypassventile (44 und 46) in ihrer zweiten Stellung befinden, und über ein Bremsgestänge aus der zweiten Stellung in die erste Stellung.

3. Hydrostatisches Getriebe nach Anspruch 2, dadurch gekennzeichnet, daß die Stellarme in ihrer zweiten Stellung durch ein federbelastetes Rastmittel feststellbar sind.

4. Hydrostatisches Getriebe nach Anspruch 2, dadurch gekennzeichnet, daß die Stellarme je ein freies Ende aufweisen, das gegen das Bremsgestänge anliegt, wenn die Radbremsen (66) angelegt sind.

5. Hydrostatisches Getriebe nach Anspruch 4, dadurch gekennzeichnet, daß das Bremsgestänge bei angelegten Radbremsen (66) einen Schalter (62) in einem Sromkreis schließt und das Fahrzeug bei geschlossenem Stromkreis gestartet werden kann.

## Claims

1. A hydrostatic transmission for a vehicle, especially a small tractor (10), with wheel brakes (66), comprising a pump (28), a motor (30), which are connected together through first and second lines (36 and 38), and a bypass line (40) connected to the lines (36 and 38) and having two bypass valves (44 and 46), which can be adjusted by at least one manually operable control means (48) between a first position blocking the flow of fluid through the bypass valves (44 and 46) and a second position allowing the passage of fluid through the bypass valves (44 and 46), characterized in that the or each control means (48) is so connected to the wheel brakes (66) that the bypass valves (44 and 46) are returned to their first position with the wheel brake (66) applied.

2. A hydrostatic transmission according to claim 1, characterized in that there are two control means (48), each consisting of a pivotally mounted actuator arm and which are manually adjustable from a first position in which the bypass valves (44 and 46) are in their first position into a second position in which the bypass valves (44 and 46) are in their second position. and which are adjustable by a brake linkage out of the second position into the first position.

3. A hydrostatic transmission according to claim 2, characterized in that the actuator arms can be retained in their second position by a spring loaded detent means.

4. A hydrostatic transmission according to claim 2, characterized in that the actuator arms each have a free end which bears on the brake linkage when the wheel brakes (66) are applied.

5. A hydrostatic transmission according to claim 4, characterized in that the brake linkage closes a switch (62) in a circuit with the wheel brakes (66) applied and the vehicle can be started with the circuit closed.

## Revendications

1. Transmission hydrostatique pour un véhicule présentant des freins de roues (66), notamment un mini-tracteur (10), ladite transmission comprenant une pompe (28) et un moteur (30) qui sont mutuellement reliés par l'intermédiaire d'une première et d'une seconde conduites (36 et 38), et comprenant une conduite de dérivation (40) raccordée aux conduites (36 et 38) et pourvue de deux soupapes de dérivation (44 et 46) qui, au moyen d'au moins un élément de commande (48) pouvant être actionné à la main, peuvent être déplacées entre une première position empêchant le passage de liquide par les soupapes de dérivation (44 et 46) et une seconde position autorisant le passage de liquide par les soupapes de dérivation (44 et 46),
**caractérisée** en ce que le ou les éléments de commande (48) est ou sont relié(s) aux freins de roues (66) de telle sorte que les soupapes de dérivation (44 et 46) sont ramenées dans leur première position lorsque les freins de roues (66) sont appliqués.

2. Transmission hydrostatique selon la revendication 1, **caractérisée** en ce que deux éléments de commande (48) sont prévus, qui sont constitués chacun d'un bras de commande monté à pivotement et qui peuvent être déplacés à la main d'une première position, dans laquelle les soupapes de dérivation (44 et 46) se trouvent dans leur première position, dans une seconde position, dans laquelle les soupapes de dérivation (44 et 46) se trouvent dans leur seconde position, et qui peuvent être déplacés de la seconde position dans la première position au moyen d'une tringlerie de freinage.

3. Transmission hydrostatique selon la revendication 2, **caractérisée** en ce que les bras de commande peuvent être bloqués dans leur seconde position par un élément d'arrêt sollicité par ressort.

4. Transmission hydrostatique selon la revendication 2, **caractérisée** en ce que les bras de commande présentent chacun une extrémité libre, qui s'applique contre la tringlerie de freinage lorsque les freins de roues (66) sont appliqués.

5. Transmission hydrostatique selon la revendication 4, **caractérisée** en ce que, lorsque les freins de roues (66) sont appliqués, la tringlerie de freinage ferme un interrupteur (62) dans un circuit électrique, le véhicule pouvant être démarré lorsque le circuit électrique est fermé.
